# EUROPÄISCHE PATENTSCHRIFT

(11) **EP 3 472 496 B1**
(45) Veröffentlichungstag und Bekanntmachung des Hinweises auf die Patenterteilung: **29.01.2020**
(21) Anmeldenummer: 17731108.1
(22) Anmeldetag: 12.06.2017
(51) Int. Cl.: F16H 63/34, F16H 63/48

(54) **VORRICHTUNG ZUM BETÄTIGEN EINER PARKSPERRE EINES AUTOMATIKGETRIEBES, SOWIE PARKSPERRENEINRICHTUNG FÜR EIN SOLCHES AUTOMATIKGETRIEBE**
DEVICE FOR ACTUATING A PARKING LOCK OF AN AUTOMATIC TRANSMISSION, AND PARKING LOCK APPARATUS FOR SUCH AN AUTOMATIC TRANSMISSION
DISPOSITIF D'ACTIONNEMENT D'UN FREIN DE STATIONNEMENT D'UNE BOÎTE DE VITESSES AUTOMATIQUE ET DISPOSITIF DE FREIN DE STATIONNEMENT POUR UNE TELLE BOÎTE DE VITESSES AUTOMATIQUE

(30) Priorität: 17.06.2016 DE 102016210874
(43) Veröffentlichungstag der Anmeldung: 24.04.2019
(73) Patentinhaber: Audi AG, 85045 Ingolstadt (DE)
(72) Erfinder: MERKLEIN, Harald, 85139 Wettstetten (DE); ZÄPFEL, Steffen, 85092 Kösching (DE)
(86) Internationale Anmeldenummer: PCT/EP2017/064257
(87) Internationale Veröffentlichungsnummer: WO 2017/216092

(56) Entgegenhaltungen:
- DE-A1-102010 043 257
- DE-A1-102010 055 859
- DE-A1-102011 105 368

## Beschreibung

Die Erfindung betrifft eine Vorrichtung zum Betätigen einer Parksperre eines Automatikgetriebes für ein Kraftfahrzeug gemäß dem Oberbegriff von Patentanspruch 1, wie offenbart in der DE 10 2011 105 368 A1, sowie eine Parksperreneinrichtung für ein Automatikgetriebe eines Kraftfahrzeugs.

Eine Vorrichtung zum Betätigen einer Parksperre eines Automatikgetriebes für ein Kraftfahrzeug, insbesondere für einen Kraftwagen, ist beispielsweise bereits der DE 10 2010 043 257 A1 als bekannt zu entnehmen. Die Vorrichtung umfasst dabei ein als Zylinder ausgebildetes Gehäuseelement sowie einen Kolben, welcher bewegbar in dem Gehäuseelement aufgenommen ist. Dabei ist der Kolben insbesondere translatorisch relativ zu dem Gehäuseelement bewegbar. Der Kolben ist zum Betätigen der Parksperre mit einem Hydraulikmedium aus einem Reservoir über eine Ventileinrichtung beaufschlagbar, wobei die Beaufschlagung des Kolbens mit dem Medium mittels der Ventileinrichtung einstellbar ist. Die Ventileinrichtung umfasst dabei ein erstes Ventil sowie ein zweites Ventil, welches in Strömungsrichtung des Hydraulikmediums von dem Reservoir zu dem Kolben stromab des ersten Ventils und stromauf des Kolbens, das heißt zwischen dem ersten Ventil und dem Kolben angeordnet ist. Das zweite Ventil weist dabei wenigstens einen Vorrichtungsanschluss auf, über welchen der Kolben mit dem Hydraulikmedium beaufschlagbar ist. Dies bedeutet, dass das Hydraulikmedium aus dem Reservoir über den Vorrichtungsanschluss des zweiten Ventils dem Kolben zuführbar ist. Ferner weist das zweite Ventil wenigstens zwei Schaltzustände auf, in welche das zweite Ventil gebracht, insbesondere bewegt, werden kann.
Außerdem weist die Vorrichtung eine durch das Gehäuseelement und durch den Kolben begrenzte Arbeitskammer auf, in welche zum Beaufschlagen des Kolbens mit dem Hydraulikmedium das Hydraulikmedium aus dem Reservoir über die Ventileinrichtung einleitbar ist. Mit anderen Worten kann das Hydraulikmedium aus dem Reservoir über den Vorrichtungsanschluss des zweiten Ventils in die Arbeitskammer eingeleitet werden, um dadurch den Kolben mit dem Hydraulikmedium zu beaufschlagen, wodurch der Kolben betätigt wird. Beispielsweise in Abhängigkeit von einem Druck des Hydraulikmediums wird durch Einleiten des Hydraulikmediums in die Arbeitskammer eine Kraft von dem Hydraulikmedium auf den Kolben ausgeübt, welcher mittels der Kraft betätigt, insbesondere relativ zu dem Gehäuseelement bewegt, werden kann.

Ferner ist ein elektrisch betätigbarer Aktor vorgesehen, mittels welchem durch Bestromen des Aktors das zweite Ventil aus einem ersten der Schaltzustände in den zweiten Schaltzustand bewegbar und somit bringbar ist. Das zweite Ventil ist somit ein elektrisch betätigbares Ventil, welches mithilfe von elektrischem Strom betätigt und vorliegend aus dem ersten Schaltzustand in den zweiten Schaltzustand bewegt werden kann. Unter dem Bestromen des Aktors ist zu verstehen, dass der Aktor mit elektrischem Strom versorgt wird, um dadurch mittels des Aktors das zweite Ventil zu betätigen und dabei aus dem ersten Schaltzustand in den zweiten Schaltzustand zu bringen, das heißt zu bewegen. Des Weiteren umfasst die Vorrichtung wenigstens ein Federelement, mittels welchem das zweite Ventil in einem unbestromten Zustand des Aktors aus dem zweiten Schaltzustand in den ersten Schaltzustand bewegbar ist.

Ferner offenbart die DE 10 2010 055 859 A1 eine Vorrichtung zum Betätigen einer Parksperre eines automatischen Getriebes in Kraftfahrzeugen, mit einer mit einem Sperrzahnrad zusammenwirkenden Sperrklinke, die zum Einlegen der Parksperre durch einen Federspeicher beaufschlagt ist und die zum Auslegen der Parksperre durch eine hydraulische Getriebesteuerung mit entsprechenden Steuerventilen hydraulisch entgegen der Vorspannkraft des Federspeichers beaufschlagbar ist. Dabei sind die Steuerventile nach Maßgabe von Betriebsparametern des Kraftfahrzeugs und einer Wähleinrichtung elektrisch ansteuerbar. Ferner ist ein elektro-magnetisch betätigbares Verriegelungselement vorgesehen, welches im angesteuerten Zustand die Sperrklinke bei definierten Betriebszuständen des Kraftfahrzeugs zusätzlich in der ausgelegten Position hält. Des Weiteren ist es vorgesehen, dass in die hydraulische Getriebesteuerung ein rein hydraulisch wirkendes Selbsthalteventil integriert ist, das bei Druckbeaufschlagung der Parksperrenbetätigung beziehungsweise bei ausgelegter Parksperre den angesteuerten Systemdruck aufrecht erhält.

Schließlich ist aus der DE 10 2009 035 348 A1 eine Parksperrenvorrichtung für ein automatisches oder automatisiertes Kraftfahrzeuggetriebe bekannt, mit mindestens einem Sperrglied und mit mindestens einem Hydraulikzylinder. Der Hydraulikzylinder und/oder dessen Kolben ist mit einem Federelement, vorzugsweise einer Druckfeder, in einer Stellrichtung federbelastet, wobei das Kraftfahrzeuggetriebe mittels des Sperrglieds blockierbar ist und wobei das Sperrglied funktional wirksam mit dem Hydraulikzylinder und/oder mit dem Kolben gekoppelt ist, sodass im drucklosen Zustand des Hydraulikzylinders mittels des Federelements beziehungsweise der Druckfeder das Sperrglied einrückbar und das Kraftfahrzeuggetriebe blockierbar ist. Durch eine Druckbeaufschlagung des Hydraulikzylinders ist das Sperrglied ausrückbar, wobei der Druck im Hydraulikzylinder über eine Druckleitung mit einem Sicherheitsventil regelbar ist. Dabei ist es vorgesehen, dass in der Druckleitung zwischen dem Sicherheitsventil und dem Hydraulikzylinder ein Schieberventil vorgesehen ist, welches über ein Schaltventil vorgesteuert ist.

Aufgabe der vorliegenden Erfindung ist es, eine Vorrichtung sowie eine Parksperreneinrichtung der eingangs genannten Art derart weiterzuentwickeln, dass ein einfach aufgebauter und redundanter Sperrmechanismus mit geringem Bauraumbedarf realisierbar ist.

Diese Aufgabe wird durch eine Vorrichtung mit den Merkmalen des Patentanspruchs 1 sowie durch eine Parksperreneinrichtung mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft eine Vorrichtung zum Betätigen einer Parksperre eines Automatikgetriebes für ein Kraftfahrzeug, mit einem in einem Gehäuseelement bewegbar aufgenommenen Kolben, welcher zum Betätigen der Parksperre mit einem Hydraulikmedium aus einem Reservoir über eine Ventileinrichtung beaufschlagbar ist. Das Gehäuseelement ist beispielsweise ein Zylinder, wobei der Kolben beispielsweise translatorisch bewegbar in dem Zylinder aufgenommen ist. Somit ist der Kolben relativ zu dem Gehäuseelement, insbesondere translatorisch, bewegbar.

Der Kolben ist dabei über die Ventileinrichtung mit dem Hydraulikmedium beaufschlagbar, sodass die Beaufschlagung des Kolbens mit dem Hydraulikmedium mittels der Ventileinrichtung einstellbar, das heißt steuerbar beziehungsweise regelbar ist.

Die Ventileinrichtung umfasst dabei ein erstes Ventil sowie ein zweites Ventil, welches in Strömungsrichtung des Hydraulikmediums von dem Reservoir zu dem Kolben stromab des ersten Ventils und stromauf des Kolbens angeordnet ist. Mit anderen Worten ist das zweite Ventil bezogen auf die Strömungsrichtung des Hydraulikmediums von dem Reservoir zu dem Kolben zwischen dem Kolben und dem ersten Ventil angeordnet. Das zweite Ventil weist wenigstens einen Vorrichtungsanschluss auf, über welchen der Kolben mit dem Hydraulikmedium beaufschlagbar ist. Dies bedeutet, dass das Hydraulikmedium dem Kolben aus dem Reservoir über den Vorrichtungsanschluss des zweiten Ventils zuführbar ist. Das zweite Ventil weist ferner zwei Schaltzustände auf, in welche das zweite Ventil gebracht beziehungsweise bewegt werden kann.

Ferner weist die Vorrichtung eine durch das Gehäuseelement und durch den Kolben zumindest teilweise begrenzte Arbeitskammer auf, in welche zum Beaufschlagen des Kolbens mit dem Hydraulikmedium das Hydraulikmedium aus dem Reservoir über die Ventileinrichtung einleitbar ist. Mit anderen Worten wird das Hydraulikmedium aus dem Reservoir über die Ventileinrichtung und insbesondere über den Vorrichtungsanschluss des zweiten Ventils in die Arbeitskammer eingeleitet, um dadurch den Kolben mit dem in die Arbeitskammer eingeleiteten Hydraulikmedium zu beaufschlagen. Dadurch wird der Kolben betätigt, das heißt relativ zu dem Gehäuseelement bewegt. Das in die Arbeitskammer eingeleitete Hydraulikmedium übt beispielsweise in Abhängigkeit von seinem Druck eine Kraft auf den Kolben aus, welcher mittels der Kraft betätigt und dabei relativ zu dem Gehäuseelement bewegt wird.

Ferner umfasst die Vorrichtung einen elektrisch betätigbaren Aktor, mittels welchem durch Bestromen des Aktors das zweite Ventil aus einer ersten der Schaltzustände in den zweiten Schaltzustand bewegbar ist. Unter dem Bestromen des Aktors ist zu verstehen, dass der Aktor mit elektrischem Strom versorgt wird, um dadurch das zweite Ventil aus dem ersten Schaltzustand in den zweiten Schaltzustand zu bewegen und insbesondere in dem zweiten Schaltzustand zu halten. Das zweite Ventil ist somit ein elektrisch betätigbares Ventil, da das zweite Ventil mithilfe von elektrischem Strom betätigt, das heißt insbesondere aus dem ersten Schaltzustand in den zweiten Schaltzustand bewegt werden kann. Ferner wird der Aktor beispielsweise bestromt, um das zweite Ventil in dem zweiten Schaltzustand zu halten.
Die Vorrichtung umfasst ferner wenigstens ein Federelement, mittels welchem das zweite Ventil in einem unbestromten Zustand des Aktors aus dem zweiten Schaltzustand in den ersten Schaltzustand bewegbar ist. Unter dem unbestromten Zustand des Aktors ist zu verstehen, dass der Aktor nicht mit elektrischem Strom versorgt wird. Beispielsweise ist das Federelement in dem zweiten Schaltzustand des zweiten Ventils stärker als in dem ersten Schaltzustand gespannt, sodass das Federelement in dem zweiten Schaltzustand eine Federkraft bereitstellt, welche beispielsweise auf das zweite Ventil wirkt. Dabei wird das zweite Ventil entgegen der Federkraft in dem zweiten Schaltzustand gehalten, indem der Aktor beispielsweise mit elektrischem Strom versorgt, das heißt bestromt, wird.

Wird das Bestromen des Aktors beispielsweise beendet, sodass der Aktor von seinem bestromten Zustand in seinen unbestromten Zustand überführt wird, so kann sich das Federelement beispielsweise entspannen beziehungsweise das zweite Ventil wird mittels der Federkraft aus dem zweiten Schaltzustand in den ersten Schaltzustand bewegt. Vorzugsweise ist es vorgesehen, dass das Federelement auch in dem ersten Schaltzustand noch etwas gespannt ist, sodass das Federelement auch in dem ersten Schaltzustand eine Federkraft bereitstellt, welche auf das zweite Ventil wirkt, sodass das zweite Ventil mittels der Federkraft in dem ersten Schaltzustand gehalten werden kann.

Um nun einen besonders einfach aufgebauten, redundanten Sperrmechanismus der Vorrichtung mit einem besonders geringen Bauraumbedarf zu realisieren, ist erfindungsgemäß eine mit dem Vorrichtungsanschluss des zweiten Ventils fluidisch verbundene Steuerleitung vorgesehen, über welche das zweite Ventil mit dem Hydraulikmedium beaufschlagbar und dadurch in dem zweiten Schaltzustand zu halten ist. Über die Steuerleitung kann das zweite Ventil mit einem am Ausgang des zweiten Ventils herrschenden Druck des Hydraulikmediums beaufschlagt werden, sodass das zweite Ventil mittels des Hydraulikmediums beziehungsweise mittels des Drucks des Hydraulikmediums in dem zweiten Schaltzustand gehalten werden kann, insbesondere dann, wenn der Aktor stromlos ist, das heißt wenn der Aktor nicht bestromt wird. Mit anderen Worten ist es durch die beschriebene Druckbeaufschlagung des zweiten Ventils über die Steuerleitung möglich, das zweite Ventil, wenn sich der Aktor in seinem unbestromten Zustand befindet, in dem zweiten Schaltzustand zu halten, sodass das Ventil gegen eine unerwünschte Bewegung aus dem zweiten Schaltzustand in den ersten Schaltzustand gesichert werden kann.

Somit ist es erfindungsgemäß vorgesehen, das zweite Ventil nicht nur als elektrisch betätigbares Ventil, sondern als elektrisch und hydraulisch betätigbares Ventil auszugestalten, sodass das zweite Ventil sowohl mittels des Aktors und somit mithilfe von elektrischem Strom als auch mittels des Hydraulikmediums und somit hydraulisch in dem zweiten Schaltzustand gehalten und gegen eine unerwünschte Bewegung aus dem zweiten Schaltzustand in den ersten Schaltzustand gesichert werden kann. Dadurch kann ein einfach aufgebauter redundanter Sperrmechanismus realisiert werden, wobei gleichzeitig der Bauraumbedarf und der Strombedarf der erfindungsgemäßen Vorrichtung besonders gering gehalten werden können. Darüber hinaus kann eine zumindest weitgehend freie Platzierbarkeit der Vorrichtung beziehungsweise des Sperrmechanismus im Automatikgetriebe realisiert werden.

Durch den Einsatz der Steuerleitung kann ein hydraulisches Sperrsystem beziehungsweise ein hydraulischer Sperrmechanismus für den Kolben und somit für die Parksperre des vorzugsweise als Shift-by-Wire-Getriebe ausgebildeten Automatikgetriebes realisiert werden. Dabei liegt der Erfindung insbesondere folgende Erkenntnis zugrunde: Herkömmliche Automatikgetriebe von Kraftfahrzeugen sind in der Regel mit einer mechanischen Parksperre zum Blockieren einer Abtriebswelle des Getriebes ausgerüstet. Dem Getriebe ist dabei üblicherweise ein im Innenraum des Kraftfahrzeugs angeordneter Wählhebel zugeordnet, welcher beispielsweise zwischen wenigstens einer Fahrstellung und wenigstens einer Parkstellung bewegt werden kann. Die Parkstellung wird üblicherweise auch als P bezeichnet. Wird der Wählhebel in die Parkstellung P bewegt, sodass eine Parkstufe des Getriebes angewählt wird, so wird die Parksperre eingelegt.

Die Fahrstellung wird üblicherweise auch mit D bezeichnet. Wird der Wählhebel in die Fahrstellung D bewegt, so wird eine Fahrstufe des Getriebes eingelegt. In der Fahrstufe beziehungsweise in anderen, von der Parkstufe unterschiedlichen Fahrstufen, in welcher beziehungsweise in welchen das Kraftfahrzeug rollfähig sein soll, ist die Parksperre ausgelegt. Wird somit beispielsweise der Wählhebel von der Parkstellung P in die beispielsweise mit D bezeichnete Fahrstellung bewegt, so wird die Parksperre ausgelegt. Bei Automatikgetrieben mit elektrischer Fahrstufenwahl, welche somit als Shift-by-Wire-Getriebe ausgebildet sind, wird die Parksperre meist durch einen Hydraulikzylinder ausgelegt, der eine Parksperrenbetätigungswelle in eine Richtung verdreht. Dieser Hydraulikzylinder umfasst beispielsweise das zuvor beschriebene Gehäuseelement und den zuvor beschriebenen Kolben, welcher hydraulisch betätigt und somit bewegt wird, um beispielsweise die Parksperrenbetätigungswelle zu verdrehen. Durch Verdrehen der Parksperrenbetätigungswelle wird beispielsweise eine Parksperrenklinke aus einem Zusammenwirken mit einem korrespondierenden und beispielsweise drehfest mit der Abtriebswelle verbundenen Parksperrenrad bewegt. Dann ist die Parksperre ausgelegt. Beim Einlegen der Parksperre wird die Parksperrenklinke in Zusammenwirken, insbesondere in formschlüssiges Zusammenwirken, mit dem Parksperrenrad bewegt, wodurch die Abtriebswelle gegen eine Drehung gesichert ist. Dadurch kann das Kraftfahrzeug gegen ein Wegrollen gesichert werden.

Somit ist es vorgesehen, den Hydraulikzylinder beziehungsweise den Kolben mit dem Hydraulikmedium und somit mit einem Druck zu beaufschlagen, um dadurch die Parksperre auszulegen. Damit beim Auftreten von Fehlern in der Hydraulik, die zu einem Druckabfall im Hydraulikzylinder führen, kein unbeabsichtigtes Einlegen der Parksperre, zum Beispiel während einer Fahrt des Kraftfahrzeugs, erfolgt, sind üblicherweise zusätzliche elektromechanische Sperrsysteme vorgesehen, die als redundantes System auch bei abfallendem Hydraulikdruck das Einlegen der Parksperre verhindern. Ferner können elektromechanische Systeme zum Einsatz kommen, die den als Parksperrenauslegezylinder fungieren Hydraulikzylinder in der Parkstufe als redundantes System verriegeln und damit ein Auslegen bei unbeabsichtigter Druckbeaufschlagung des Parksperrenauslegezylinders, das heißt des Hydraulikzylinders, verhindern.

Die herkömmlichen elektromechanischen Sperrsysteme weisen dabei die folgenden Nachteile auf: Die Konstruktionen sind meist sehr aufwendig, da üblicherweise Zangensysteme und Sperrkugelsysteme zum Einsatz kommen. Die herkömmlichen Sperrsysteme müssen für den Fall eines Verriegelns der Parkstufe sehr groß dimensioniert werden, um gegen den Hydraulikdruck gesperrt halten zu können und haben dadurch einen erheblichen Bauraum- und Strombedarf. Ferner müssen die herkömmlichen Sperrsysteme im Kraftfluss des Hydraulikzylinders angeordnet werden. Dadurch ist die Platzierbarkeit im Getriebe erheblich eingeschränkt. Diese Probleme und Nachteile können mittels der erfindungsgemäßen Vorrichtung vermieden werden, da sich durch den Einsatz der Steuerleitung ein hydraulisches Sperrsystem realisieren lässt.

Um die Vorrichtung und somit die Parksperre gegen eine unbeabsichtigte Betätigung besonders vorteilhaft sichern zu können, sind bei einer vorteilhaften Ausführungsform der Erfindung eine an den Vorrichtungsanschluss angeschlossene Zuführleitung, über welche das Hydraulikmedium von dem Vorrichtungsanschluss der Arbeitskammer zuführbar ist, und ein in der Zuführleitung angeordnetes Rückschlagventil vorgesehen, welches in Richtung der Arbeitskammer öffnet und in Richtung des Vorrichtungsanschlusses sperrt. Dies bedeutet, dass das Rückschlagventil eine Strömung des Hydraulikmediums durch die Zuführleitung in Richtung der Arbeitskammer und somit von dem zweiten Ventil weg zulässt, da das Rückschlagventil in Richtung der Arbeitskammer öffnet. Da das Rückschlagventil jedoch in Richtung des Vorrichtungsanschlusses sperrt, verhindert das Rückschlagventil eine Strömung des Hydraulikmediums durch die Zuführleitung von der Arbeitskammer weg in Richtung des Vorrichtungsanschlusses und somit in Richtung des zweiten Ventils.

Dabei hat es sich als besonders vorteilhaft gezeigt, wenn die Steuerleitung mit der Zuführleitung an einer Verbindungsstelle fluidisch verbunden ist, welche in Strömungsrichtung des Hydraulikmediums zwischen dem Vorrichtungsanschluss und dem Rückschlagventil angeordnet ist. Beispielsweise bezogen auf eine Strömungsrichtung des Hydraulikmediums von dem Vorrichtungsanschluss zu der Arbeitskammer ist somit die Verbindungsstelle stromab des Vorrichtungsanschlusses und stromauf des Rückschlagventils angeordnet. Hierdurch wird der Druck an dem Vorrichtungsanschluss des zweiten Ventils gehalten und über die Steuerleitung auf das zweite Ventil rückgeführt, wodurch das zweite Ventil hydraulisch, das heißt durch die zuvor beschriebene Druckbeaufschlagung über die Steuerleitung, in dem zweiten Schaltzustand gehalten wird, insbesondere auch dann, wenn sich der Aktor in seinem unbestromten Zustand befindet beziehungsweise unerwünscht in seinen unbestromten Zustand kommt. Hierdurch ist ein besonders effektives hydraulisches Sperrsystem realisierbar.

Die vorliegende Erfindung zeichnet sich zudem dadurch aus, dass eine einerseits fluidisch mit der Arbeitskammer verbundene und andererseits an einen zweiten Vorrichtungsanschluss des zweiten Ventils angeschlossene erste Rückführleitung vorgesehen ist, über welche das Hydraulikmedium aus der Arbeitskammer zu dem zweiten Ventil führbar ist. Ferner ist eine einerseits fluidisch mit dem Reservoir verbundene und andererseits an einen dritten Vorrichtungsanschluss des zweiten Ventils angeschlossene zweite Rückführleitung vorgesehen, über welche das Hydraulikmedium von dem zweiten Ventil in das Reservoir führbar ist. Außerdem ist eine einerseits fluidisch mit dem Reservoir verbundene und andererseits an einen vierten Vorrichtungsanschluss des zweiten Ventils angeschlossene dritte Rückführleitung vorgesehen, über welche das Hydraulikmedium von dem zweiten Ventil in das Reservoir führbar ist. Des Weiteren ist eine einerseits an einen fünften Vorrichtungsanschluss des zweiten Ventils und andererseits an einen sechsten Vorrichtungsanschluss des ersten Ventils angeschlossene Verbindungsleitung vorgesehen. Dadurch können auf besonders bauraumgünstige Weise besonders vorteilhafte Strömungswege für das hydraulische Medium realisiert werden, sodass unbeabsichtigte Betätigungen der Vorrichtung und somit der Parksperre auf besonders einfache und bauraumgünstige Weise vermieden werden können.

Die jeweilige Zuführleitung, Verbindungsleitung und Rückführleitung ist eine Leitung, wobei im Rahmen der Erfindung unter einer solchen Leitung ein von dem Hydraulikmedium durchströmbares Element zum Führen beziehungsweise Leiten des Hydraulikmediums zu verstehen ist. Dabei kann es sich bei der Leitung um eine separate Leitung oder aber um einen beispielsweise als Bohrung ausgebildeten Kanal handeln, welcher beispielsweise in ein entsprechendes Gehäuse, insbesondere der Ventileinrichtung, integriert ist.

Als besonders vorteilhaft hat es sich gezeigt, wenn in dem ersten Schaltzustand des zweiten Ventils die Verbindungsleitung von der Zuführleitung und von der ersten Rückführleitung getrennt ist, wobei in dem ersten Schaltzustand des zweiten Ventils die Zuführleitung über den ersten und vierten Vorrichtungsanschluss mit der dritten Rückführleitung fluidisch verbunden ist, und wobei in dem ersten Schaltzustand des zweiten Ventils die erste Rückführleitung über den zweiten und dritten Vorrichtungsanschluss mit der zweiten Rückführleitung fluidisch verbunden ist. Hierdurch kann ein bedarfsgerechter Betrieb der Vorrichtung realisiert werden, wobei insbesondere unerwünschte Betätigungen der Vorrichtung und somit der Parksperre sicher vermieden werden können.

Als weiterhin besonders vorteilhaft hat es sich gezeigt, wenn in dem zweiten Schaltzustand des zweiten Ventils die Zuführleitung über den ersten und fünften Vorrichtungsanschluss mit der Verbindungsleitung fluidisch verbunden ist, wobei in dem zweiten Schaltzustand des zweiten Ventils die erste Rückführleitung von der zweiten und dritten Rückführleitung getrennt ist. Hierdurch kann auf besonders bauraumgünstige Weise ein redundanter hydraulischer Sperrmechanismus realisiert werden, wobei die Teileanzahl, das Gewicht und die Kosten der Vorrichtung besonders gering gehalten werden können.

Eine weitere Ausführungsform zeichnet sich dadurch aus, dass eine an einen siebten Vorrichtungsanschluss des ersten Ventils angeschlossene und fluidisch mit dem Reservoir verbundene vierte Rückführleitung und eine an einen achten Vorrichtungsanschluss des ersten Ventils angeschlossene und fluidisch mit dem Reservoir verbundene zweite Rückführleitung vorgesehen sind. Hierdurch können sowohl die Zufuhr des Hydraulikmediums über die Ventileinrichtung zu der Arbeitskammer als auch die Abfuhr des Hydraulikmediums aus der Arbeitskammer über die Ventileinrichtung zu dem Reservoir bedarfsgerecht eingestellt werden, wobei gleichzeitig unbeabsichtigte beziehungsweise unerwünschte Betätigungen der Vorrichtung und somit der Parksperre vermieden werden können.

Beispielsweise ist das zweite Ventil als 5/2-Wegeventil ausgebildet, sodass das zweite Ventil beispielsweise genau fünf Vorrichtungsanschlüsse und genau zwei Schaltzustände aufweist. Alternativ oder zusätzlich ist es denkbar, dass das erste Ventil als 3/2-Wegeventil ausgebildet ist, welches genau drei Vorrichtungsanschlüsse und genau zwei Schaltzustände aufweist.

In besonders vorteilhafter Ausgestaltung der Erfindung ist in einem ersten Schaltzustand des ersten Ventils die Verbindungsleitung über den sechsten und siebten Vorrichtungsanschluss mit der vierten Rückführleitung fluidisch verbunden und von der zweiten Zuführleitung getrennt.

Bei einer weiteren vorteilhaften Ausführungsform der Erfindung ist es vorgesehen, dass in einem zweiten Schaltzustand des ersten Ventils die Verbindungsleitung über den sechsten und achten Vorrichtungsanschluss mit der zweiten Zuführleitung fluidisch verbunden und von der vierten Rückführleitung getrennt ist.

Schließlich hat es sich als besonders vorteilhaft gezeigt, wenn das zweite Ventil einen ein von dem ersten und dem zweiten Schaltzustand des zweiten Ventils unterschiedlichen Zwischenzustand aufweist, in welchem eine Strömung des Hydraulikmediums von dem ersten Vorrichtungsanschluss gleichzeitig zu dem vierten und fünften Vorrichtungsanschluss zugelassen ist.

Ein besondere Vorteil der Vorrichtung ist auch, dass ein Ruhezustand mit einer doppelten Druckabkopplung einstellbar ist. Hierzu befinden sich das erste Ventil und das zweite Ventil jeweils in dem ersten Schaltzustand.

Ein zweiter Aspekt der Erfindung betrifft eine Parksperreneinrichtung für ein Automatikgetriebe eines Kraftfahrzeugs, insbesondere eines Kraftwagens, mit wenigstens einer Parksperre und mit einer erfindungsgemäßen Vorrichtung, mittels welcher die Parksperre betätigbar ist. Vorteilhafte Ausgestaltungen des ersten Aspekts der Erfindung sind dabei als vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung einer erfindungsgemäßen Vorrichtung zum Betätigen einer Parksperre eines Automatikgetriebes für ein Kraftfahrzeug, wobei in Fig. 1 ein Ruhezustand der Vorrichtung gezeigt ist;
- Fig. 2: eine weitere schematische Darstellung der Vorrichtung, wobei in Fig. 2 ein Normalbetrieb der Vorrichtung gezeigt ist;
- Fig. 3: eine weitere schematische Darstellung der Vorrichtung, wobei in Fig. 3 ein erster Fehlerzustand gezeigt ist;
- Fig. 4: eine weitere schematische Darstellung der Vorrichtung, wobei in Fig. 4 ein zweiter Fehlerzustand gezeigt ist; und
- Fig. 5: eine weitere schematische Darstellung der Vorrichtung, wobei in Fig. 5 wenigstens ein Übergangszustand der Vorrichtung veranschaulicht ist.

In den Fig. sind gleiche oder funktionsgleiche Elemente mit gleichen Bezugszeichen versehen.

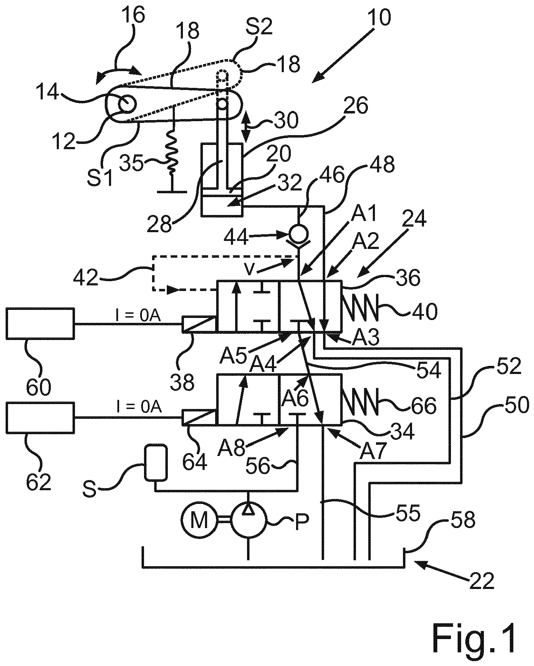

Fig. 1 zeigt eine im Ganzen mit 10 bezeichnete Vorrichtung zum Betätigen einer in Fig. 1 nicht näher dargestellten Parksperre eines Automatikgetriebes für ein Kraftfahrzeug, insbesondere eines Kraftwagens. Das Automatikgetriebe ist ein automatisches oder automatisiertes Getriebe, welches wenigstens eine Abtriebswelle aufweist, über welche Räder des Kraftfahrzeugs antreibbar sind. Die Parksperre und die Vorrichtung 10 sind Bestandteile einer Parksperreneinrichtung, welche ein drehfest mit der Abtriebswelle verbundenes Parksperrenrad aufweist. Das Parksperrenrad weist beispielsweise eine Mehrzahl von in Umfangsrichtung des Parksperrenrads aufeinanderfolgenden Zähnen auf, zwischen welchen jeweilige Zahnlücken angeordnet sind. Ferner umfasst die Parksperre wenigstens eine Klinke, welche auch als Sperrklinke oder Parksperrenklinke bezeichnet wird. Die Parksperre beziehungsweise die Klinke ist beispielsweise mit einer Betätigungswelle 12 gekoppelt, sodass die Klinke zwischen wenigstens einer Sperrstellung und wenigstens einer Freigabestellung verschwenkbar ist, indem die Betätigungswelle 12 um eine Drehachse 14 gedreht wird. Diese Drehbarkeit der Betätigungswelle 12 um die Drehachse 14 ist in Fig. 1 durch einen Doppelpfeil 16 veranschaulicht. Mit der Betätigungswelle 12 drehfest gekoppelt ist ein Betätigungsarm 18, welcher um die Drehachse 14 zwischen wenigstens einer ersten Stellung S1 und wenigstens einer zweiten Stellung S2 verschwenkbar ist. Durch Verschwenken des Betätigungsarms 18 wird die Betätigungswelle 12 um die Drehachse 14 gedreht, sodass die Klinke über die Betätigungswelle 12 und den Betätigungsarm 18 verschwenkt wird beziehungsweise verschwenkbar ist. Dadurch ist die Klinke zwischen wenigstens einer eingelegten Stellung und wenigstens einer ausgelegten Stellung verschwenkbar, indem der Betätigungsarm 18 zwischen den Stellungen S1 und S2 verschwenkt wird.

Die eingelegte Stellung der Klinke beziehungsweise der Parksperre korrespondiert dabei mit der ersten Stellung S1, wobei die ausgelegte Stellung der

Parksperre beziehungsweise der Klinke mit der zweiten Stellung S2 korrespondiert. Dies bedeutet, dass der Betätigungsarm 18 aus der zweiten Stellung S2 in die erste Stellung S1 verschwenkt wird, um die Parksperre einzulegen. Um die Parksperre auszulegen, wird der Betätigungsarm 18 aus der ersten Stellung S1 in die zweite Stellung S2 verschwenkt. In der eingelegten Stellung wirkt die Parksperre, insbesondere ihre Klinke, formschlüssig mit dem Parksperrenrad zusammen, indem beispielsweise die Parksperre, insbesondere ihre Klinke, in eine der Zahnlücken eingreift. Dadurch sind das Parksperrenrad und über diese die Abtriebswelle gegen eine Drehung gesichert, sodass sich die von der Abtriebswelle antreibbaren Räder des Kraftfahrzeugs nicht drehen können. Dadurch wird das Kraftfahrzeug gegen ein unerwünschtes Wegrollen gesichert.

In der ausgelegten Stellung befindet sich die Parksperre, insbesondere ihre Klinke, außer Zusammenwirken mit dem Parksperrenrad. Dies bedeutet, dass die Parksperre, insbesondere ihre Klinke, in der ausgelegten Stellung in keine der Zahnlücken eingreift, sodass die Parksperre die Abtriebswelle für eine Drehung freigibt. Dadurch ist das Kraftfahrzeug in der ausgelegten Stellung der Parksperre rollfähig.

Die Vorrichtung 10 umfasst dabei einen Kolben 20, welcher zum Betätigen, insbesondere zum Auslegen, der Parksperre mit einem Hydraulikmedium, das heißt mit einer Flüssigkeit, aus einem im Ganzen mit 22 bezeichneten Reservoir über eine Ventileinrichtung 24 der Vorrichtung 10 beaufschlagbar ist. Dies bedeutet, dass die Vorrichtung 10 die Ventileinrichtung 24 und gegebenenfalls das Reservoir 22 umfasst.

Die Vorrichtung 10 umfasst dabei einen als Gehäuseelement ausgebildeten Zylinder 26, in welchem der Kolben 20 translatorisch bewegbar aufgenommen ist. Dies bedeutet, dass der Kolben 20 translatorisch relativ zu dem Zylinder 26 bewegt werden kann. Dabei ist der Kolben 20 mit einer Kolbenstange 28 verbunden, sodass die Kolbenstange 28 mit dem Kolben 20 relativ zu dem Zylinder 26 mitbewegbar ist. Diese Bewegbarkeit des Kolbens 20 und der Kolbenstange 28 relativ zu dem Zylinder 26 ist in Fig. 1 durch einen Doppelpfeil 30 veranschaulicht. Um die Parksperre auszulegen, das heißt um die Parksperre aus ihrem eingelegten Zustand in ihren ausgelegten Zustand zu bewegen, wird der Kolben 20 derart relativ zu dem Zylinder 26 bewegt, dass die Kolbenstange 28 aus dem Zylinder 26 herausbewegt wird. Dadurch wird der Betätigungsarm 18 aus der ersten Stellung S1 in die zweite Stellung S2 bewegt. Um den Kolben 20 zu betätigen und um somit die Parksperre auszulegen, wird der Kolben 20 mit dem Hydraulikmedium aus dem Reservoir 22 beaufschlagt. Hierzu wird - wie im Folgenden noch genauer erläutert wird - das Hydraulikmedium in den Zylinder 26, insbesondere in eine durch den Kolben 20 und durch den Zylinder 26 jeweils teilweise begrenzte Arbeitskammer 32 der Vorrichtung 10, eingeleitet.

Um die Parksperre auszulegen, das heißt um die Parksperre aus ihrem eingelegten Zustand in ihren ausgelegten Zustand zu bewegen, wird das Hydraulikmedium aus dem Zylinder 26, insbesondere aus der Arbeitskammer 32, abgeführt. Ferner ist zum Auslegen der Parksperre ein als Rückstellfeder 35 ausgebildetes erstes Federelement vorgesehen, welches beispielsweise mit dem Betätigungsarm 18 gekoppelt und in dem ausgelegten Zustand der Parksperre stärker als in dem eingelegten Zustand gespannt ist. Dadurch stellt die Rückstellfeder 35 in dem ausgelegten Zustand eine Federkraft bereit, welche - vorliegend über den Betätigungsarm 18 und die Betätigungswelle 12 - auf die Parksperre wirkt. Die Parksperre wird beispielsweise mittels des in den Zylinder 26, insbesondere die Arbeitskammer 32, eingeleiteten Hydraulikmediums entgegen der von der Rückstellfeder 35 bereitgestellten Federkraft in dem ausgelegten Zustand gehalten. Wird das Hydraulikmedium aus der Arbeitskammer 32 abgeführt, so kann sich die Rückstellfeder 35 beispielsweise entspannen, sodass die Parksperre mittels der Rückstellfeder 35 beziehungsweise mittels der von der Rückstellfeder 35 bereitgestellten Federkraft eingelegt werden kann. Dies ist vorliegend der Fall, da dann, wenn das Hydraulikmedium zumindest teilweise aus der Arbeitskammer 32 abgeführt wird, der Betätigungsarm 18 mittels der Federkraft der Rückstellfeder 35 aus der zweiten Stellung S2 in die erste Stellung S1 verschwenkt wird.

Der Kolben 20 und der Zylinder 26 bilden einen Hydraulikzylinder zum Betätigen der Parksperre, wobei dieser Hydraulikzylinder auch als Parksperren-Auslegezylinder (PAZ) bezeichnet wird. Die Ventileinrichtung 24 umfasst ein erstes Ventil 34, welches vorliegend als 3/2-Wegeventil ausgebildet ist und auch als Ansteuerventil oder Parksperren-Ansteuerventil (PAV) bezeichnet wird.

Die Ventileinrichtung 24 umfasst ferner ein zweites Ventil 36, welches in Strömungsrichtung des Hydraulikmediums von dem Reservoir 22 zu dem Kolben 20 beziehungsweise zu der Arbeitskammer 32 stromab des ersten Ventils 34 und stromauf des Kolbens 20, insbesondere der Arbeitskammer 32, angeordnet ist. Dies bedeutet, dass das zweite Ventil 36 bezogen auf die Strömungsrichtung des Hydraulikmediums von dem Reservoir 22 zur Arbeitskammer 32 zwischen der Arbeitskammer 32 und dem ersten Ventil 34 angeordnet ist. Wie im Folgenden noch genauer erläutert wird, ist das zweite Ventil 36 in dem in den Fig. veranschaulichten Ausführungsbeispiel als 5/2-Wegeventil ausgebildet. Dabei weist das zweite Ventil 36 einen ersten Vorrichtungsanschluss A1 auf, welcher ein Ausgang des zweiten Ventils 36 ist. Über den ersten Vorrichtungsanschluss A1 ist der Kolben 20 mit dem Hydraulikmedium beaufschlagbar, da das Hydraulikmedium aus dem Reservoir 22 über den ersten Vorrichtungsanschluss A1 in die Arbeitskammer 32 einleitbar ist beziehungsweise - zum Auslegen der Parksperre - eingeleitet wird.

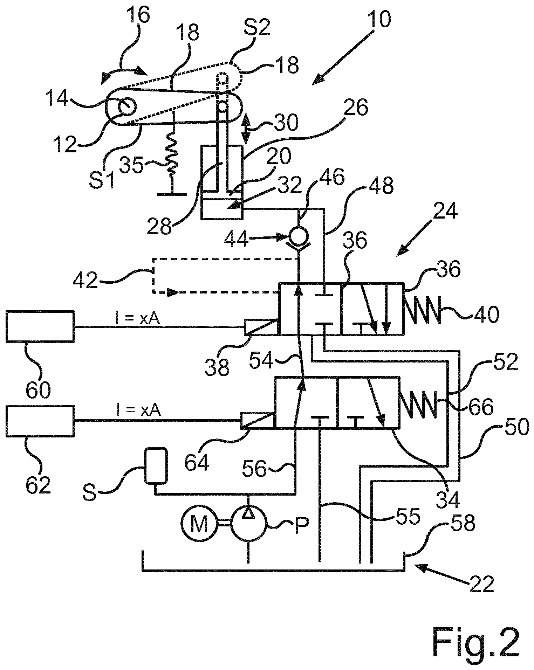

Wie im Folgenden noch genauer erläutert wird, ist das zweite Ventil 36 zwischen zwei voneinander unterschiedlichen Schaltzuständen verstellbar. Mit anderen Worten ist das zweite Ventil 36 zwischen einem in Fig. 1 veranschaulichten ersten Schaltzustand und einem in Fig. 2 veranschaulichten zweiten Schaltzustand bewegbar. Auch das erste Ventil 34 ist vorliegend zwischen zwei voneinander unterschiedlichen Schaltzuständen bewegbar, sodass das erste Ventil 34 zwischen einem ersten Schaltzustand des ersten Ventils 34 und einem zweiten Schaltzustand des ersten Ventils 34 bewegbar ist. Die Schaltzustände des Ventils 34 werden auch als dritter und vierter Schaltzustand bezeichnet, um die Schaltzustände des Ventils 34 begrifflich deutlich gegen die Schaltzustände des Ventils 36 abgrenzen zu können.

Somit weist die Ventileinrichtung 24 vier Systemzustände auf. In einem ersten der Systemzustände befinden sich die Ventile 34 und 36 in ihrem jeweiligen ersten Schaltzustand. In einem zweiten der Systemzustände befindet sich das erste Ventil 34 in seinem ersten Schaltzustand und das zweite Ventil 36 in seinem zweiten Schaltzustand. In einem dritten der Systemzustände befinden sich die Ventile 34 und 36 in ihrem jeweiligen zweiten Schaltzustand. Und in dem vierten Systemzustand befindet sich das Ventil 34 in seinem zweiten Schaltzustand, wobei sich das Ventil 36 in seinem ersten Schaltzustand befindet. Dabei kann das zweite Ventil 36 hydraulisch und/oder elektrisch in dem zweiten Schaltzustand des zweiten Ventils 36 gehalten werden.

Wie bereits zuvor angedeutet, ist in die durch den Zylinder 26 und den Kolben 20 begrenzte Arbeitskammer 32 das Hydraulikmedium aus dem Reservoir 22 einleitbar, um dadurch den Kolben 20 zu betätigen, insbesondere zu bewegen. Durch diese Betätigung beziehungsweise Bewegung des Kolbens 20 kann die Parksperre - wie zuvor beschrieben - ausgelegt werden.

Die Ventileinrichtung 24 umfasst ferner einen dem zweiten Ventil 36 zugeordneten Aktor 38, mittels welchem durch Bestromen des Aktors 38 das zweite Ventil 36 aus dem ersten Schaltzustand des zweiten Ventils 36 in den zweiten Schaltzustand des zweiten Ventils 36 bewegbar ist. Unter dem Bestromen des Aktors 38 ist zu verstehen, dass der Aktor 38 mit elektrischem Strom versorgt wird, wobei das Versorgen des Aktors 38 mit elektrischem Strom auch als Ansteuern des Aktors 38 bezeichnet wird. Der Aktor 38 ist somit ein elektrisch betätigbarer oder betreibbarer Aktor, mittels welchem das zweite Ventil 36 betätigt beziehungsweise bewegt werden kann, sodass das zweite Ventil 36 als elektrisch betätigbares Ventil ausgebildet und dabei elektrisch aus dem ersten Schaltzustand des zweiten Ventils 36 in den zweiten Schaltzustand des zweiten Ventils 36 bewegbar ist.

Ferner umfasst die Vorrichtung 10 ein dem zweiten Ventil 36 zugeordnetes zweites Federelement 40, mittels welchem das zweite Ventil 36 in einem unbestromten Zustand des Aktors 38 aus dem zweiten Schaltzustand des zweiten Ventils 36 in den ersten Schaltzustand des zweiten Ventils 36 bewegbar ist. Beispielsweise ist das Federelement 40 in dem zweiten Schaltzustand des zweiten Ventils 36 stärker als in dem ersten Schaltzustand des zweiten Ventils 36 gespannt, sodass das Federelement 40 zumindest in dem zweiten Schaltzustand des zweiten Ventils 36 eine Federkraft bereitstellt, mittels welcher das Ventil 36 aus dem zweiten Schaltzustand des zweiten Ventils 36 in den ersten Schaltzustand des zweiten Ventils 36 bewegbar ist. Das Ventil 36 wird durch Bestromen des Aktors 38 entgegen einer durch das Federelement 40 bereitgestellten Federkraft aus dem ersten Schaltzustand des zweiten Ventils 36 in den zweiten Schaltzustand des zweiten Ventils 36 bewegt und in dem zweiten Schaltzustand des zweiten Ventils 36 gehalten. Dadurch kann sich das Federelement 40 beispielsweise nicht entspannen, wenn der Aktor 38 bestromt ist, das heißt wenn der Aktor 38 mit Strom versorgt wird. Wird die Bestromung des Aktors 38 beendet, so kann sich das Federelement 40 beispielsweise entspannen, sodass das zweite Ventil 36 mittels der von dem Federelement 40 in dem zweiten Schaltzustand des zweiten Ventils 36 bereitgestellten Federkraft aus dem zweiten Schaltzustand des zweiten Ventils 36 zurück in den ersten Schaltzustand des zweiten Ventils 36 bewegt wird beziehungsweise bewegt werden kann. Beispielsweise ist das Federelement 40 auch in dem ersten Schaltzustand des zweiten Ventils 36 noch etwas gespannt, sodass das Federelement 40 auch in dem ersten Schaltzustand des zweiten Ventils 36 eine Federkraft bereitstellt, mittels welcher das zweite Ventil 36 in dem ersten Schaltzustand des zweiten Ventils 36 gehalten wird. Unter dem zuvor genannten unbestromten Zustand des Aktors 38 ist zu verstehen, dass der Aktor 38 in dem unbestromten Zustand nicht mit elektrischem Strom versorgt wird. Das zweite Ventil 36 wird auch als Sperrventil (SPV) bezeichnet.

Um nun einen einfach aufgebauten und redundanten Sperrmechanismus der Vorrichtung 10 mit geringem Bauraumbedarf, reduziertem Strombedarf und zumindest weitgehend freier Platzierbarkeit im Getriebe zu realisieren, ist eine Steuerleitung 42 vorgesehen, welche auch als hydraulische Steuerleitung (HSL) bezeichnet wird.

Die Steuerleitung 42 ist mit dem Vorrichtungsanschluss A1 fluidisch verbunden, sodass über die Steuerleitung 42 das zweite Ventil 36 mit dem an dem Vorrichtungsanschluss A1 anliegenden Hydraulikmedium beaufschlagbar und dadurch in dem zweiten Schaltzustand des zweiten Ventils 36 zu halten ist. Mit anderen Worten kann das zweite Ventil 36 über die Steuerleitung 42 mit einem Druck des Hydraulikmediums, das den genannten Druck am Vorrichtungsanschluss A1 aufweist, beaufschlagt werden, sodass das zweite Ventil 36 mittels dieses Drucks und somit hydraulisch in dem zweiten Schaltzustand des zweiten Ventils 36 gehalten werden kann. Da das zweite Ventil 36 nicht nur mittels des Aktors 38 und somit nicht nur mithilfe von elektrischem Strom, sondern auch mithilfe des Drucks und somit hydraulisch in der zweiten Schaltstellung gehalten werden kann, ist das zweite Ventil 36 als elektrisch und hydraulisch betätigbares Ventil ausgebildet.

Ferner ist an dem als Ausgang ausgebildeten Vorrichtungsanschluss A1 ein Rückschlagventil 44 (RSV) angeordnet. Dabei ist das Rückschlagventil 44 in einer an den Vorrichtungsanschluss A1 angeschlossenen Zuführleitung 46 angeordnet, über welche der Arbeitskammer 32 das Hydraulikmedium von dem Vorrichtungsanschluss A1 zuführbar ist. Die Zuführleitung 46 ist somit einerseits fluidisch mit der Arbeitskammer 32 verbunden und andererseits an den Vorrichtungsanschluss A1 angeschlossen. Das Rückschlagventil 44 sperrt dabei in Richtung des Vorrichtungsanschlusses A1 und öffnet in Richtung der Arbeitskammer 32, sodass das Hydraulikmedium durch die Zuführleitung 46 in Richtung der Arbeitskammer 32, jedoch nicht in Richtung des Vorrichtungsanschlusses A1 strömen kann.
Dabei ist die Steuerleitung 42 an einer Verbindungsstelle V fluidisch mit der Zuführleitung 46 verbunden, wobei die Verbindungsstelle V in Strömungsrichtung des Hydraulikmediums durch die Zuführleitung 46 zwischen dem Vorrichtungsanschluss A1 und dem Rückschlagventil 44 angeordnet ist. Dadurch kann beispielsweise dann, wenn sich das zweite Ventil 36 in dem zweiten Schaltzustand des zweiten Ventils 36 befindet und wenn aufgrund eines Fehlers die Bestromung des Aktors 38 endet, in der Steuerleitung 42 der Druck des Hydraulikmediums gehalten werden, sodass das zweite Ventil 36 mittels des Drucks des Hydraulikmediums in dem zweiten Schaltzustand des zweiten Ventils 36 gehalten werden kann.

Die Vorrichtung 10 umfasst ferner eine einerseits fluidisch mit der Arbeitskammer 32 verbundene und andererseits an einen zweiten Vorrichtungsanschluss A2 des zweiten Ventils 36 angeschlossene erste Rückführleitung 48, über welche das Hydraulikmedium aus der Arbeitskammer 32 zu dem zweiten Ventil 36, insbesondere zu dem Vorrichtungsanschluss A2, führbar ist. Ferner umfasst die Vorrichtung 10 eine einerseits fluidisch mit dem Reservoir 22 verbundene und andererseits an einen dritten Vorrichtungsanschluss A3 des zweiten Ventils 36 angeschlossene zweite Rückführleitung 50, über welche das Hydraulikmedium von dem zweiten Ventil 36, insbesondere von dem Vorrichtungsanschluss A3, in das Reservoir 22 führbar ist. Außerdem ist eine einerseits fluidisch mit dem Reservoir 22 verbundene und andererseits an einen vierten Vorrichtungsanschluss A4 des zweiten Ventils 36 angeschlossene dritte Rückführleitung 52 vorgesehen, über welche das Hydraulikmedium von dem zweiten Ventil 36, insbesondere von dem Vorrichtungsanschluss A4, in das Reservoir 22 führbar ist. Ferner umfasst die Vorrichtung 10 eine einerseits an einen fünften Vorrichtungsanschluss A5 des zweiten Ventils 36 und andererseits an einen sechsten Vorrichtungsanschluss A6 des ersten Ventils 34 angeschlossenen Verbindungsleitung 54, über welche das Hydraulikmedium von dem Ventil 34 zum Ventil 36 beziehungsweise umgekehrt strömen kann.

Außerdem ist eine einerseits an einen siebten Vorrichtungsanschluss A7 des Ventils 34 angeschlossene und andererseits mit dem Reservoir 22 verbundene vierte Rückführleitung 55 vorgesehen, über welche beispielsweise das Hydraulikmedium von dem Ventil 34, insbesondere von dem Vorrichtungsanschluss A7, in das Reservoir 22 führbar ist. Des Weiteren umfasst die Vorrichtung 10 eine zweite Zuführleitung 56, welche einerseits an einen achten Vorrichtungsanschluss A8 des Ventils 34 angeschlossen und andererseits fluidisch mit dem Reservoir 22 verbunden ist. Dabei umfasst das Reservoir 22 einen Vorratsbehälter 58, in welchem das beispielsweise als Öl ausgebildete Hydraulikmedium aufgenommen beziehungsweise gespeichert ist.

Die Vorrichtung 10 umfasst ferner eine Pumpe P, welche von einem beispielsweise als Elektromotor ausgebildeten Motor M antreibbar ist. Durch Antreiben der Pumpe P wird mittels der Pumpe P das Hydraulikmedium aus dem Reservoir 22, insbesondere aus dem Vorratsbehälter 58, angesaugt und zu der Zuführleitung 56 gefördert, wobei das Hydraulikmedium durch die Zuführleitung 56 hindurch zu dem Vorrichtungsanschluss A8 und somit zu dem Ventil 34 gefördert wird. Ferner umfasst das Reservoir 22 einen als Druckspeicher ausgebildeten Speicher S, in welchem das Hydraulikmedium unter Druck gespeichert werden kann. Mittels der Pumpe P kann das Hydraulikmedium aus dem Vorratsbehälter 58 zu dem und insbesondere in den Speicher S gefördert werden, sodass das zu dem Speicher S beziehungsweise in den Speicher S geförderte Hydraulikmedium in dem Speicher S unter Druck gespeichert werden kann. Dadurch ist es beispielsweise möglich, zum Auslegen der Parksperre zumindest ein Teil des in dem Speicher S unter Druck gespeicherten Hydraulikmediums zu verwenden und den Kolben 20 mit Hydraulikmedium aus dem Speicher S zu beaufschlagen.

Der Vorrichtungsanschluss A5 ist beispielsweise ein Druckeingang des Ventils 36, wobei die Vorrichtungsanschlüsse A3 und A4 Verbindungen zu dem Vorratsbehälter 58 darstellen. Das Rückschlagventil 44 ist dabei an dem Vorrichtungsanschluss A1 angeordnet und sperrt einen Rückfluss des Hydraulikmediums von dem Parksperren-Auslegezylinder (PAZ) in das Sperrventil (SPV). Die hydraulische Steuerleitung 42 (HSL) ist dabei zwischen dem Rückschlagventil 44 und dem Vorrichtungsanschluss A1 angeordnet, wobei die Steuerleitung 42 beziehungsweise das die Steuerleitung 42 durchströmende beziehungsweise in der Steuerleitung 42 aufgenommene Hydraulikmedium bei Druckbeaufschlagung das Ventil 36 in den zweiten Schaltzustand des zweiten Ventils 36 bewegt. Mit anderen Worten ist das zweite Ventil 36 über die Steuerleitung 42 mit dem Hydraulikmedium und somit mit einem Druck des Hydraulikmediums beaufschlagbar und dadurch in den zweiten Schaltzustand des zweiten Ventils 36 bewegbar beziehungsweise in dem zweiten Schaltzustand des zweiten Ventils 36 zu halten.

Zum Ansteuern und somit Betreiben des Aktors 38 ist beispielsweise ein erstes Steuergerät 60 vorgesehen, welches beispielsweise einem sogenannten Wählhebelmodul zugeordnet ist. Das Wählhebelmodul umfasst das erste Steuergerät 60, welches als elektronisches Steuergerät ausgebildet ist. Ferner umfasst das Wählhebelmodul beispielsweise einen in dem Innenraum des Kraftfahrzeugs angeordneten Wählhebel, mittels welchem unterschiedliche Fahrstufen des Automatikgetriebes anwählbar und dadurch einlegbar sind. Bei einer ersten der Fahrstufen handelt es sich beispielsweise um eine Parkstufe P. Zum Einlegen der Parkstufe P wird der Wählhebel in seine ebenfalls mit P bezeichnete Parkstellung bewegt, wodurch die Parksperre eingelegt wird. Bei einer zweiten der Fahrstufen handelt es sich um eine mit D bezeichnete Fahrstufe, in welcher das Kraftfahrzeug rollfähig ist. Zum Einlegen der Fahrstufe D wird der Wählhebel beispielsweise in seine ebenfalls mit D bezeichnete Fahrstellung bewegt, sodass die Parksperre ausgelegt wird.

Ferner ist ein von dem Steuergerät 60 unterschiedliches, zusätzlich zu dem Steuergerät 60 vorgesehenes Steuergerät 62 vorgesehen, welches beispielsweise ein Getriebesteuergerät ist. Dabei umfasst die Vorrichtung 10 einen zusätzlich zu dem Aktor 38 vorgesehenen, dem Ventil 34 zugeordneten zweiten Aktor 64, welcher ebenfalls elektrisch betreibbar beziehungsweise betätigbar ist. Mittels des Aktors 64 ist das erste Ventil 34 aus seinem ersten Schaltzustand in seinen zweiten Schaltzustand bewegbar und insbesondere in dem zweiten Schaltzustand des ersten Ventils 34 zu halten. Dabei ist das erste Ventil 34 mittels des Aktors 64 durch Bestromen des Aktors 64 aus dem ersten Schaltzustand des ersten Ventils 34 in den zweiten Schaltzustand des ersten Ventils 34 bewegbar.

Ferner umfasst die Vorrichtung 10 ein zusätzlich zum Federelement 40 vorgesehenes, dem Ventil 34 zugeordnetes drittes Federelement 66, mittels welchem das Ventil 34 in einem unbestromten Zustand des Aktors 64 aus dem zweiten Schaltzustand des ersten Ventils 34 in den ersten Schaltzustand des ersten Ventils 34 bewegbar ist. Beispielsweise ist das Federelement 66 in dem zweiten Schaltzustand des ersten Ventils 34 stärker als in dem ersten Schaltzustand des ersten Ventils 34 gespannt, sodass das Federelement 66 in dem zweiten Schaltzustand des ersten Ventils 34 eine Federkraft bereitstellt, mittels welcher das Ventil 34 aus dem zweiten Schaltzustand des ersten Ventils 34 in den ersten Schaltzustand des ersten Ventils 34 bewegbar ist. Vorzugsweise ist das Federelement 66 in dem ersten Schaltzustand des ersten Ventils 34 noch etwas gespannt, sodass das Federelement 66 auch im ersten Schaltzustand des ersten Ventils 34 eine Federkraft bereitstellt, mittels welcher das Ventil 34 in dem ersten Schaltzustand des ersten Ventils 34 gehalten werden kann. Das Ventil 34 wird durch Bestromen des Aktors 64 aus dem ersten Schaltzustand des ersten Ventils 34 in den zweiten Schaltzustand des ersten Ventils 34 gegen eine von dem Federelement 66 bereitgestellte Federkraft bewegt und in dem zweiten Schaltzustand des ersten Ventils 34 gehalten. Wird das Bestromen des Aktors 64 beendet, so kann sich das Federelement 66 beispielsweise ein Stück entspannen, sodass das Ventil 34 mittels der von dem Federelement 66 bereitgestellten Federkraft aus dem zweiten Schaltzustand des ersten Ventils 34 in den ersten Schaltzustand des ersten Ventils 34 zurückbewegt werden kann. Somit ist das Ventil 34 als elektrisch betätigbares Ventil ausgebildet.

In Fig. 1 ist erkennbar, dass der Aktor 38 mittels des Steuergeräts 60 angesteuert werden kann, sodass die Bestromung des Aktors 38 mittels des Steuergeräts 60 einstellbar ist. Dadurch ist das Ventil 36 über den Aktor 38 mittels des Steuergeräts 60 betätigbar, das heißt beispielsweise zwischen dem ersten und dem zweiten Schaltzustand des Ventils 36 bewegbar. Ferner ist aus Fig. 1 erkennbar, dass der Aktor 64 mittels des Steuergeräts 62, welches als elektronisches Steuergerät ausgebildet ist, ansteuerbar ist, sodass das Bestromen des Aktors 64 mittels des Steuergeräts 62 einstellbar ist. Dadurch ist das erste Ventil 34 über den Aktor 64 mittels des Steuergeräts 62 betätigbar, das heißt beispielsweise zwischen dem ersten Schaltzustand des ersten Ventils 34 und dem zweiten Schaltzustand des ersten Ventils 34 bewegbar. In dem ersten Schaltzustand des zweiten Ventils 36 ist das zweite Ventil 36 (Sperrventil SPV) unbetätigt und dabei in dem ersten Schaltzustand des zweiten Ventils 36 mittels der von dem Federelement 40 bereitgestellten Federkraft gehalten.

Da das Hydraulikmedium beispielsweise als Öl ausgebildet ist, wird die Strömung des Hydraulikmediums im Folgenden auch als Ölströmung oder Ölfluss bezeichnet. In dem ersten Schaltzustand des zweiten Ventils 36 ist der Ölfluss von dem Ventil 34 zu der Arbeitskammer 32 beziehungsweise zu dem Kolben 20 über den Vorrichtungsanschluss A5 gesperrt, und der Ölfluss von der Arbeitskammer 32 über die Vorrichtungsanschlüsse A2 und A3 zum Vorratsbehälter 58 ist geöffnet beziehungsweise freigegeben. Der Ölfluss von der Steuerleitung 42 zum Vorratsbehälter 58 über die Vorrichtungsanschlüsse A1 und A4 ist ebenfalls geöffnet beziehungsweise freigegeben.

In dem zweiten Schaltzustand des zweiten Ventils 36 ist das Ventil 36 gegen das als Rückstellfeder fungierende Federelement 40 elektrisch betätigt. Dabei ist der Ölfluss von dem Ventil 34 über die Vorrichtungsanschlüsse A5 und A1 zur Arbeitskammer 32 geöffnet beziehungsweise freigegeben, und der Ölfluss von der Arbeitskammer 32 über den Vorrichtungsanschluss A2 über das Ventil 36 und weiter in den Vorratsbehälter 58 ist gesperrt.

Hierdurch kann ein hydraulisches Sperrsystem realisiert werden, welches lediglich ein einfaches Ventil in Form des Ventils 36 mit nur zwei Schaltpositionen sowie ein einfaches Rückschlagventil in Form des Rückschlagventils 44 umfassen kann. Das hydraulische Sperrsystem erfordert wegen der kleinen Baugröße der Ventile 34 und 36 und des Rückschlagventils 44 einen nur geringen Bauraum. Das Sperrventil (SPV) hat einen sehr geringen Strombedarf, unabhängig von einem anliegenden Druckniveau und einem daraus resultierenden Sperrkraftbedarf. Die räumliche Anordnung der Sperrsystemkomponenten "Sperrventil (SPV)" und "Rückschlagventil 44 (RSV)" kann unabhängig von der Anordnung des Parksperren-Auslegezylinders (PAZ) erfolgen. Ferner ermöglicht es das hydraulische Sperrsystem, beide Parksperren-Zustände, das heißt sowohl den eingelegten Zustand als auch den ausgelegten Zustand, sicher zu sperren.

Fig. 1 zeigt dabei einen Ruhezustand, in dem das Kraftfahrzeug beispielsweise stromlos und die Parksperre eingelegt ist. Kommt es beispielsweise zu einem Fehler in dem Getriebesteuergerät (Steuergerät 62), so sind beide Ventile 34 und 36 nicht bestromt. Der jeweilige Strom, mit dem der jeweilige Aktor 38 beziehungsweise 64 versorgt wird, ist in Fig. 1 mit I bezeichnet. Da vorliegend weder der Aktor 38 noch der Aktor 64 und somit weder das Ventil 36 noch das Ventil 34 bestromt sind, beträgt der jeweilige Strom I 0 Ampere, sodass gilt: I = 0 A (Ampere). Dieser Ruhezustand ist besonders vorteilhaft, da eine doppelte Druckabkopplung realisiert ist. Ein im Druckspeicher S vorliegender hydraulischer Überdruck wird so redundant über zwei Sperrventile in Form der Ventile 34 und 36 daran gehindert, den Kolben 20 im Zylinder 26 zu bewegen.

Fig. 2 zeigt einen Normalbetriebszustand, in welchem das Kraftfahrzeug bestromt und die Parksperre ausgelegt ist. Dabei sind beide Ventile 34 und 36 beziehungsweise deren Aktoren 64 und 38 bestromt, sodass sich das Ventil 36 in seinem zweiten Schaltzustand und das Ventil 34 in seinem zweiten Schaltzustand befindet. Aus Fig. 1 und 2 ist erkennbar, dass in dem ersten Schaltzustand des Ventils 36 die Verbindungsleitung 54 von der Zuführleitung 46 und von der ersten Rückführleitung 48 getrennt ist, wobei in dem ersten Schaltzustand des Ventils 36 die Zuführleitung 46 über den ersten Vorrichtungsanschluss A1 und den vierten Vorrichtungsanschluss A4 mit der dritten Rückführleitung 52 fluidisch verbunden ist. Ferner ist in dem ersten Schaltzustand des Ventils 36 die erste Rückführleitung 48 über den zweiten Vorrichtungsanschluss A2 und den dritten Vorrichtungsanschluss A3 mit der zweiten Rückführleitung 50 fluidisch verbunden.

In dem zweiten Schaltzustand des Ventils 36 ist die Zuführleitung 46 über den ersten Vorrichtungsanschluss A1 und den fünften Vorrichtungsanschluss A5 mit der Verbindungsleitung 54 fluidisch verbunden, wobei in dem zweiten Schaltzustand des Ventils 36 die erste Rückführleitung 48 von der zweiten Rückführleitung 50 und von der dritten Rückführleitung 54 getrennt ist.

In dem ersten Schaltzustand des ersten Ventils 34 ist die Verbindungsleitung 54 über den sechsten Vorrichtungsanschluss A6 und den siebten Vorrichtungsanschluss A7 mit der vierten Rückführleitung 55 fluidisch verbunden und von der zweiten Zuführleitung 56 getrennt. In dem zweiten Schaltzustand des ersten Ventils 34 ist die Verbindungsleitung 54 über den sechsten Vorrichtungsanschluss A6 und den achten Vorrichtungsanschluss A8 mit der zweiten Zuführleitung 56 fluidisch verbunden und von der vierten Rückführleitung 55 getrennt.

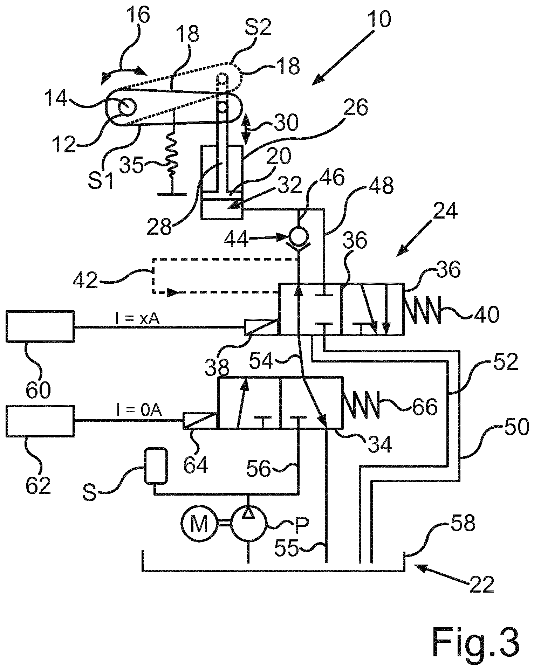

Fig. 3 veranschaulicht einen ersten Fehlerzustand der Vorrichtung 10. Dabei ist das Kraftfahrzeug bestromt, und die Parksperre ist ausgelegt. Beispielsweise kommt es in dem Steuergerät 62 (Getriebesteuergerät) zu einem Fehler, sodass es beispielsweise zu einem Ausfall beziehungsweise einem Entfall der Bestromung des Aktors 64 beziehungsweise des Ventils 34 kommt. Dann ist die Steuerleitung 42 beziehungsweise ein durch die Steuerleitung 42 gebildeter Pfad, über welchen das Ventil 36 mit dem Hydraulikmedium und somit mit dessen Druck beaufschlagbar ist, drucklos, und das Ventil 36 wird elektrisch, das heißt mittels des Aktors 38 beziehungsweise durch Bestromung des Aktors 38, in dem zweiten Schaltzustand des Ventils 36 gehalten. Dabei ist das Einlegen der Parksperre noch immer möglich, indem der Aktor 38 beziehungsweise das Ventil 36 abgeschaltet wird, das heißt indem die Bestromung des Aktors 38 beendet wird, sodass das Ventil 36 mittels des Federelements 40 aus dem zweiten Schaltzustand des Ventils 36 in den ersten Schaltzustand des Ventils 36 bewegt werden kann.

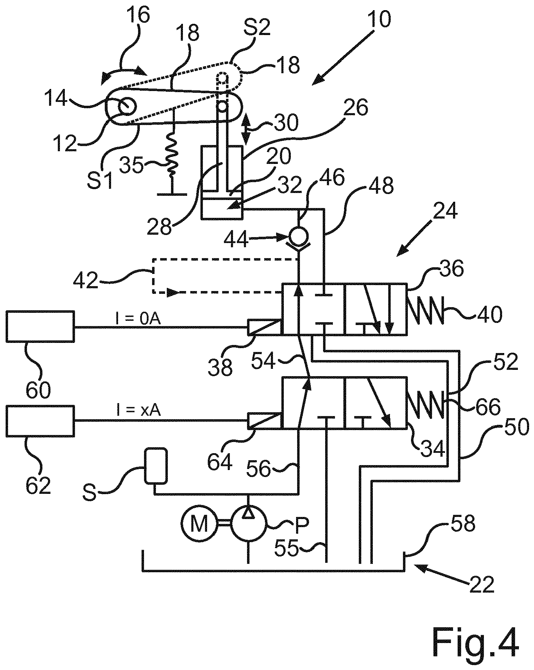

Fig. 4 zeigt einen zweiten Fehlerzustand der Vorrichtung 10. Dabei ist das Kraftfahrzeug bestromt und die Parksperre ist ausgelegt. Dabei kommt es beispielsweise zu einem Fehler in dem Steuergerät 60, sodass der Aktor 38 beziehungsweise das Ventil 36 nicht bestromt ist. Dazu kommt es beispielsweise bei einem Entfall beziehungsweise Ausfall der Stromversorgung des Aktors 38. In diesem Fall bleibt die Steuerleitung 42 beziehungsweise der durch die Steuerleitung 42 gebildete Pfad druckbeaufschlagt, sodass das Ventil 36 hydraulisch in dem zweiten Schaltzustand des Ventils 36 gehalten wird. Das Ventil 34 beziehungsweise der Aktor 64 bleibt bestromt. Dabei ist das Einlegen der Parksperre immer noch möglich, indem der Aktor 64 beziehungsweise das Ventil 34 abgeschaltet wird, das heißt indem die Bestromung des Aktors 64 beendet wird, sodass beispielsweise das Ventil 34 mittels des Federelements 66 aus dem zweiten Schaltzustand des Ventils 34 in den ersten Schaltzustand des Ventils 34 bewegt werden kann. Somit ist die Steuerleitung 42 drucklos, sodass auch das Ventil 36 öffnet beziehungsweise aus dem zweiten Schaltzustand in den ersten Schaltzustand bewegt wird.

Bei einer bevorzugten Ausführungsform kann vorgesehen sein, dass das Ventil 36 redundant beziehungsweise unabhängig von einem zweiten beziehungsweise anderen Steuergerät als das Ventil 34 angesteuert wird. Die Ansteuerung des Ventils 36 erfolgt beispielsweise durch ein Schaltbetätigungs-Steuergerät (SBSG) einer Shift-by-Wire-Schaltbetätigung. Dies ist in Fig. 1 bis 5 veranschaulicht, da der Aktor 64 mittels des Steuergeräts 62 und der Aktor 38 mittels des von dem Steuergerät 62 unterschiedlichen, zusätzlich dazu vorgesehenen Steuergeräts 60 angesteuert wird. Vorzugsweise sind das Rückschlagventil 44 und die hydraulische Steuerleitung 42 in ein Ventilgehäuse des Ventils 36 (Sperrventil SPV) integriert. Alternativ oder zusätzlich kann vorgesehen sein, dass das Sperrventil (Ventil 36), das Rückschlagventil 44 und die hydraulische Steuerleitung 42 in eine Baueinheit mit dem Parksperren-Auslegezylinder (PAZ) integriert sind.

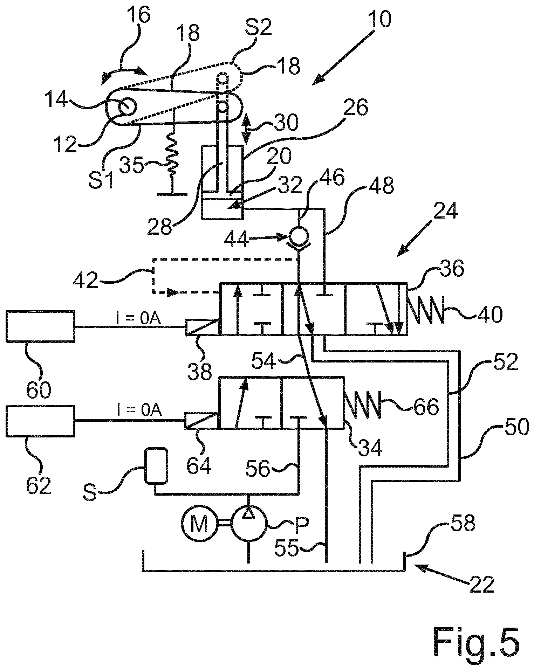

Alternativ oder zusätzlich ist beispielsweise für das Entleeren der hydraulischen Steuerleitung 42 beim Abschalten des Ventils 36, das heißt beim Beenden der Bestromung des Aktors 38, ein Zwischenzustand des Ventils 36 vorgesehen. Unter dem Entleeren der hydraulischen Steuerleitung 42 ist zu verstehen, dass das zunächst in der Steuerleitung 42 aufgenommene Hydraulikmedium aus der Steuerleitung 42 abgeführt wird. Bei dem Zwischenzustand wird ein Ölfluss, das heißt eine Strömung des Hydraulikmediums von dem Vorrichtungsanschluss A1 gleichzeitig zu den Vorrichtungsanschlüssen A5 und A4 eingestellt beziehungsweise zugelassen, was beispielsweise durch eine sogenannte Ventilüberschneidung, insbesondere des Ventils 36, realisierbar ist. Dieser Zwischenzustand wird auch als Übergangszustand bezeichnet, welcher in Fig. 5 veranschaulicht ist. In diesem von dem ersten und dem zweiten Schaltzustand unterschiedlichen Übergangszustand ist die Zuführleitung 46 und beispielsweise über diese die Steuerleitung 42 über den Vorrichtungsanschluss A1 fluidisch mit den Vorrichtungsanschlüssen A4 und A5 verbunden, sodass beispielsweise Hydraulikmedium aus der Steuerleitung 42 über den Vorrichtungsanschluss A1 und die Vorrichtungsanschlüsse A4 und A5 zu den Rückführleitungen 52 und 55 und über diese in das Reservoir 22 strömen kann. Dabei ist es vorzugsweise vorgesehen, dass der Zwischen- beziehungsweise Übergangszustand nicht gezielt angesteuert wird, sondern bei dem Wechsel zwischen dem unbetätigten und betätigten Zustand des Ventils 36, das heißt bei dem Wechsel zwischen dem ersten Schaltzustand und dem zweiten Schaltzustand, durchlaufen wird. Gegenüber diesem in Fig. 5 veranschaulichten Zwischen- beziehungsweise Übergangszustand ist eine alternative Ausführung mit geöffnetem beziehungsweise zugelassenem Ölfluss von dem Vorrichtungsanschluss A2 zu dem Vorrichtungsanschluss A3 möglich.

Die Vorrichtungsanschlüsse A3 und A4 können zwar prinzipiell zu einem einzigen Vorrichtungsanschluss zusammengefasst werden, sind vorliegend jedoch bewusst getrennt voneinander ausgeführt, um eine Rückwirkung des Drucks des Hydraulikmediums aus dem Parksperren-Auslegezylinder auf die hydraulische Steuerleitung 42 ausschließen zu können. Die beispielsweise drucklosen Rückführleitungen 50, 52 und/oder 55 von den jeweiligen Vorrichtungsanschlüssen A3, A4 beziehungsweise A7 können in vielen Anwendungsfällen nicht erforderlich sein. Es genügt normalerweise, dass das Hydraulikmedium aus dem jeweiligen Ventilgehäuse direkt in das Innere des Getriebes abfließen kann, wo es sich in einer Ölwanne sammelt. Diese Ölwanne ist beispielsweise der Vorratsbehälter 58. Mit anderen Worten können die Rückführleitungen 50, 52 und/oder 55 beispielsweise in ein jeweiliges Gehäuse des Ventils 36 beziehungsweise 34 integriert und insbesondere als Bohrungen ausgebildet sein.

Bei einer weiteren Ausführungsform kann vorgesehen sein, dass das Ventil 36, das Rückschlagventil 44 und die hydraulische Steuerleitung 42 in einem Schieberkasten des Getriebes oder an einer beliebigen Stelle im Ölfluss zwischen dem Parksperren-Ansteuerventil (erstes Ventil 34) und dem Parksperren-Auslegezylinder (PAZ) angeordnet sein können.

Durch den in Fig. 5 veranschaulichten Übergangszustand können beispielsweise undefinierte oder schwingende Übergangszustände vermieden werden. Dabei sollte ein in der Steuerleitung 42 aufgenommenes Restvolumen des Hydraulikmediums keine Schaltbeeinflussung bewirken. Das Restvolumen sollte sich entspannen können, beispielsweise in einer Speicherkammer oder in einem Tank wie beispielsweise dem Vorratsbehälter 58. Die Steuerleitung 42 sollte derart druckbeaufschlagt werden, wenn das Ventil 36 vollständig geschaltet ist, um ein hydraulisches Aufschießen des Ventils 36 zu vermeiden, wenn es in dem Übergangszustand ist, das heißt bei einem Druck-Peak selbst, wobei die Steuerleitung 42 erst ganz zum Schluss wirksam ist. Durch die getrennte Ausführung der Vorrichtungsanschlüsse A3 und A4 kann eine druckführende Verbindung des durch die Steuerleitung 42 gebildeten Pfads zu einem durch den PAZ gebildeten Pfad während des Abschaltens vermieden werden, um einen Druck-Peak beziehungsweise einen Rückschlag auf den durch die Steuerleitung 42 gebildeten Pfad zu vermeiden.

## Patentansprüche

1. Vorrichtung (10) zum Betätigen einer Parksperre eines Automatikgetriebes für ein Kraftfahrzeug, mit einem in einem Gehäuseelement (26) bewegbar aufgenommenen Kolben (20), welcher zum Betätigen der Parksperre mit einem Hydraulikmedium aus einem Reservoir (22) über eine Ventileinrichtung (24) beaufschlagbar ist, welche ein erstes Ventil (34) und ein in Strömungsrichtung des Hydraulikmediums von dem Reservoir (22) zu dem Kolben (20) stromab des ersten Ventils (34) und stromauf des Kolbens (20) angeordnetes zweites Ventil (36) umfasst, das wenigstens einen Vorrichtungsanschluss (A1), über welchen der Kolben (20) mit dem Hydraulikmedium beaufschlagbar ist, und wenigstens zwei Schaltzustände aufweist, mit einer durch das Gehäuseelement (26) und durch den Kolben (20) begrenzten Arbeitskammer (32), in welche zum Beaufschlagen des Kolbens (20) mit dem Hydraulikmedium das Hydraulikmedium aus dem Reservoir (22) über die Ventileinrichtung (24) einleitbar ist, mit einem elektrisch betätigbaren Aktor (38), mittels welchem durch Bestromen des Aktors (38) das zweite Ventil (36) aus einem ersten der Schaltzustände in den zweiten Schaltzustand bewegbar ist, und mit wenigstens einem Federelement (40), mittels welchem das zweite Ventil (36) in einem unbestromten Zustand des Aktors (38) aus dem zweiten Schaltzustand in den ersten Schaltzustand bewegbar ist, wobei eine mit dem Vorrichtungsanschluss (A1) fluidisch verbundene Steuerleitung (42) vorgesehen ist, über welche das zweite Ventil (36) mit dem Hydraulikmedium beaufschlagbar und dadurch in dem zweiten Schaltzustand zu halten ist
**gekennzeichnet durch**:
- eine einerseits fluidisch mit der Arbeitskammer (32) verbundene und andererseits an einen zweiten Vorrichtungsanschluss (A2) des zweiten Ventils (36) angeschlossene erste Rückführleitung (48), über welche das Hydraulikmedium aus der Arbeitskammer (32) zu dem zweiten Ventil (36) führbar ist;
- eine einerseits fluidisch mit dem Reservoir (22) verbundene und andererseits an einen dritten Vorrichtungsanschluss (A3) des zweiten Ventils (36) angeschlossene zweite Rückführleitung (50), über welche das Hydraulikmedium von dem zweiten Ventil (36) in das Reservoir (22) führbar ist;
- eine einerseits fluidisch mit dem Reservoir (22) verbundene und andererseits an einen vierten Vorrichtungsanschluss (A4) des zweiten Ventils (36) angeschlossene dritte Rückführleitung (52), über welche das Hydraulikmedium von dem zweiten Ventil (36) in das Reservoir (22) führbar ist; und
- eine einerseits an einen fünften Vorrichtungsanschluss (A5) des zweiten Ventils (36) und andererseits an einen sechsten Vorrichtungsanschluss (A6) des ersten Ventils (34) angeschlossene Verbindungsleitung (54).

2. Vorrichtung (10) nach Anspruch 1,
**dadurch gekennzeichnet, dass**
eine an den Vorrichtungsanschluss (A1) angeschlossene Zuführleitung (46), über welche der Arbeitskammer (32) das Hydraulikmedium von dem Vorrichtungsanschluss (A1) zuführbar ist, und ein in der Zuführleitung (46) angeordnetes Rückschlagventil (44) vorgesehen sind, welches in Richtung der Arbeitskammer (32) öffnet und in Richtung des Vorrichtungsanschlusses (A1) sperrt.

3. Vorrichtung (10) nach Anspruch 2,
**dadurch gekennzeichnet, dass**
die Steuerleitung (42) mit der Zuführleitung (46) an einer Verbindungsstelle (V) fluidisch verbunden ist, welche in Strömungsrichtung des Hydraulikmediums zwischen dem Vorrichtungsanschluss (A1) und dem Rückschlagventil (44) angeordnet ist.

4. Vorrichtung (10) nach Anspruch 2 oder 3,
**dadurch gekennzeichnet, dass**
in dem ersten Schaltzustand des zweiten Ventils (36) die Verbindungsleitung (54) von der Zuführleitung (46) und von der ersten Rückführleitung (48) getrennt ist, wobei in dem ersten Schaltzustand des zweiten Ventils (36) die Zuführleitung (46) über den ersten und vierten Vorrichtungsanschluss (A1, A4) mit der dritten Rückführleitung (52) fluidisch verbunden ist, und wobei in dem ersten Schaltzustand des zweiten Ventils (36) die erste Rückführleitung (48) über den zweiten und dritten Vorrichtungsanschluss (A2, A3) mit der zweiten Rückführleitung (50) fluidisch verbunden ist.

5. Vorrichtung (10) nach einem der Ansprüche 2 bis 4,
**dadurch gekennzeichnet, dass**
in dem zweiten Schaltzustand des zweiten Ventils (36) die Zuführleitung (46) über den ersten und fünften Vorrichtungsanschluss (A1, A5) mit der Verbindungsleitung (54) fluidisch verbunden ist, wobei in dem zweiten Schaltzustand des zweiten Ventils (36) die erste Rückführleitung (48) von der zweiten und dritten Rückführleitung (50, 52) getrennt ist.

6. Vorrichtung (10) nach einem der vorhergehenden Ansprüche,
**dadurch gekennzeichnet, dass**
eine einerseits an einen siebten Vorrichtungsanschluss (A7) des ersten Ventils (34) angeschlossene und andererseits fluidisch mit dem Reservoir (22) verbundene vierte Rückführleitung (55) und eine einerseits an einen achten Vorrichtungsanschluss (A8) des ersten Ventils (34) angeschlossene und andererseits fluidisch mit dem Reservoir (22) verbundene zweite Zuführleitung (56) vorgesehen sind.

7. Vorrichtung (10) nach Anspruch 6,
**dadurch gekennzeichnet, dass**
in einem ersten Schaltzustand des ersten Ventils (34) die Verbindungsleitung (54) über den sechsten und siebten Vorrichtungsanschluss (A6, A7) mit der vierten Rückführleitung (55) fluidisch verbunden und von der zweiten Zuführleitung (56) getrennt ist.

8. Vorrichtung (10) nach Anspruch 6 oder 7,
**dadurch gekennzeichnet, dass**
in einem zweiten Schaltzustand des ersten Ventils (34) die Verbindungsleitung (54) über den sechsten und achten Vorrichtungsanschluss (A6, A8) mit der zweiten Zuführleitung (56) fluidisch verbunden und von der vierten Rückführleitung (55) getrennt ist.

9. Vorrichtung (10) nach einem der vorhergehenden Ansprüche,
**dadurch gekennzeichnet, dass**
das zweite Ventil (36) einen ein von dem ersten und dem zweiten Schaltzustand des zweiten Ventils (36) unterschiedlichen Zwischenzustand aufweist, in welchem eine Strömung des Hydraulikmediums von dem ersten Vorrichtungsanschluss (A1) gleichzeitig zu dem vierten und fünften Vorrichtungsanschluss (A4, A5) zugelassen ist.

10. Parksperreneinrichtung für ein Automatikgetriebe eines Kraftfahrzeugs, mit wenigstens einer Parksperre und mit einer Vorrichtung (10) nach einem der vorhergehenden Ansprüche zum Betätigen der Parksperre.

## Claims

1. Device (10) for the actuation of a parking lock of an automatic transmission for a motor vehicle, having a piston (20) which is movably accommodated in a housing element (26), which for the actuation of the parking lock, can be acted upon via a valve device (24) by a hydraulic medium from a reservoir (22), which has a first valve (34) and a second valve (36) arranged downstream of the first valve (34) and upstream of the piston (20) in the direction of flow of the hydraulic medium from the reservoir (22) to the piston (20), which has at least one device connection (A1), via which the hydraulic medium can be applied to the piston (20), and at least two switching states, having a working chamber (32) which is bounded by the housing element (26) and by the piston (20) and into which the hydraulic medium can be introduced from the reservoir (22) via the valve device (24) in order to apply the hydraulic medium to the piston (20), having an electrically actuable actuator (38), by means of which the second valve (36) can be moved from a first of the switching states into the second switching state by energizing the actuator (38), and having at least one spring element (40) by means of which the second valve (36) can be moved from the second switching state into the first switching state in an unenergized state of the actuator (38), wherein a control line (42) is provided which is fluidically connected to the device connection (A1) and via which the hydraulic medium can be applied to the second valve (36) and is thereby to be maintained in the second switching state,
**characterised in that**
- a first return line (48), which on the one hand is fluidically connected to the working chamber (32) and on the other hand is connected to a second device connection (A2) of the second valve (36), via which the hydraulic medium can be guided from the working chamber (32) to the second valve (36);
- a second return line (50), which on the one hand is fluidically connected to the reservoir (22) and on the other hand is connected to a third device connection (A3) of the second valve (36) and via which the hydraulic medium can be guided from the second valve (36) into the reservoir (22);
- a third return line (52), which on the one hand is fluidically connected to the reservoir (22) and on the other hand is connected to a fourth device connection (A4) of the second valve (36) and via which the hydraulic medium can be guided from the second valve (36) into the reservoir (22); and
- a connecting line (54) connected on the one hand to a fifth device connection (A5) of the second valve (36) and on the other hand to a sixth device connection (A6) of the first valve (34).

2. Device (10) according to claim 1,
**characterised in that**
a supply line (46), which is connected to the device connection (A1) and via which the hydraulic medium can be supplied to the working chamber (32) from the device connection (A1), and a non-return valve (44), which is arranged in the supply line (46), are provided, which opens in the direction of the working chamber (32) and locks in the direction of the device connection (A1).

3. Device (10) according to claim 2,
**characterised in that**
the control line (42) is fluidically connected to the supply line (46) at a connection point (V) which is arranged in the flow direction of the hydraulic medium between the device connection (A1) and the non-return valve (44).

4. Device (10) according to claim 2 or 3,
**characterised in that**,
in the first switching state of the second valve (36), the connecting line (54) is separated from the supply line (46) and from the first return line (48), wherein, in the first switching state of the second valve (36), the supply line (46) is fluidically connected to the third return line (52) via the first and fourth device connections (A1, A4), and, wherein, in the first switching state of the second valve (36), the first return line (48) is fluidically connected to the second return line (50) via the second and third device connections (A2, A3).

5. Device according to any one of claims 2 to 4,
**characterised in that**
in the second switching state of the second valve (36), the feed line (46) is fluidically connected to the connecting line (54) via the first and fifth device connections (A1, A5), wherein in the second switching state of the second valve (36) the first return line (48) is separated from the second and third return lines (50, 52).

6. Device (10) according to any one of the preceding claims,
**characterised in that**
a fourth return line (55) connected on the one hand to a seventh device connection (A7) of the first valve (34) and on the other hand fluidically connected to the reservoir (22) and a second supply line (56) connected on the one hand to an eighth device connection (A8) of the first valve (34) and on the other hand fluidically connected to the reservoir (22) are provided.

7. Device (10) according to claim 6,
**characterised in that**,
in a first switching state of the first valve (34), the connecting line (54) is fluidically connected to the fourth return line (55) via the sixth and seventh device connection (A6, A7) and is separated from the second supply line (56).

8. Device (10) according to claim 6 or 7,
**characterised in that**,
in a second switching state of the first valve (34), the connecting line (54) is fluidically connected to the second supply line (56) via the sixth and eighth device connection (A6, A8) and is separated from the fourth return line (55).

9. Device (10) according to any one of the preceding claims,
**characterised in that**
the second valve (36) has an intermediate state different from the first and second switching states of the second valve (36), in which a flow of the hydraulic medium from the first device connection (A1) to the fourth and fifth device connections (A4, A5) is permitted simultaneously.

10. Parking lock device for an automatic transmission of a motor vehicle, having at least one parking lock and having a device (10) according to any one of the preceding claims for the actuation of the parking lock.

## Revendications

1. Dispositif (10) servant à actionner un frein de stationnement d'une boîte de vitesses automatique pour un véhicule automobile, avec un piston (20) logé de manière à pouvoir être déplacé dans un élément de boîtier (26), lequel peut être soumis, pour actionner le frein de stationnement, à l'action d'un milieu hydraulique provenant d'un réservoir (22) par l'intermédiaire d'un système à soupapes (24), lequel comprend une première soupape (34) et une deuxième soupape (36) disposée dans une direction d'écoulement du milieu hydraulique depuis le réservoir (22) vers le piston (20) en aval de la première soupape (34) et en amont du piston (20), qui présente au moins un raccord de dispositif (A1), par l'intermédiaire duquel le piston (20) peut être soumis à l'action du milieu hydraulique, et au moins deux états de commutation, avec une chambre de travail (32) délimitée par l'élément de boîtier (26) et par le piston (20), dans laquelle, pour soumettre le piston (20) à l'action du milieu hydraulique, le milieu hydraulique peut être acheminé depuis le réservoir (22) en passant par le système à soupapes (24), avec un actionneur (38) pouvant être actionné électriquement, au moyen duquel la deuxième soupape (36) peut être déplacée depuis un premier des états de commutation dans le deuxième état de commutation par l'alimentation en courant de l'actionneur (38), et avec au moins un élément de ressort (40), au moyen duquel la deuxième soupape (36) peut être déplacée dans un état non alimenté en courant de l'actionneur (38) depuis le deuxième état de commutation dans le premier état de commutation, dans lequel un conduit de commande (42) relié fluidiquement au raccord de dispositif (A1) est prévu, par l'intermédiaire duquel la deuxième soupape (36) peut être soumise à l'action du milieu hydraulique et doit être maintenue de ce fait dans le deuxième état de commutation,
**caractérisé par** :
- un premier conduit de retour (48) relié d'une part fluidiquement à la chambre de travail (32) et raccordé d'autre part à un deuxième raccord de dispositif (A2) de la deuxième soupape (36), par l'intermédiaire duquel le milieu hydraulique peut être guidé depuis la chambre de travail (32) vers la deuxième soupape (36) ;
- un deuxième conduit de retour (50) relié d'une part fluidiquement au réservoir (22) et raccordé d'autre part à un troisième raccord de dispositif (A3) de la deuxième soupape (36), par l'intermédiaire duquel le milieu hydraulique peut être guidé depuis la deuxième soupape (36) dans le réservoir (22) ;
- un troisième conduit de retour (52) relié d'une part fluidiquement au réservoir (22) et raccordé d'autre part à un quatrième raccord de dispositif (A4) de la deuxième soupape (36), par l'intermédiaire duquel le milieu hydraulique peut être guidé depuis la deuxième soupape (36) dans le réservoir (22) ; et
- un conduit de liaison (54) raccordé d'une part à un cinquième raccord de dispositif (A5) de la deuxième soupape (36) et d'autre part à un sixième raccord de dispositif (A6) de la première soupape (34).

2. Dispositif (10) selon la revendication 1,
**caractérisé en ce que**
sont prévus un conduit d'amenée (46) raccordé au raccord de dispositif (A1), par l'intermédiaire duquel le milieu hydraulique peut être amené depuis le raccord de dispositif (A1) à la chambre de travail (32), et une soupape anti-retour (44) disposée dans le conduit d'amenée (46), laquelle ouvre en direction de la chambre de travail (32) et ferme en direction du raccord de dispositif (A1).

3. Dispositif (10) selon la revendication 2,
**caractérisé en ce que**
le conduit de commande (42) est relié fluidiquement au conduit d'amenée (46) au niveau d'un emplacement de liaison (V), lequel est disposé dans la direction d'écoulement du milieu hydraulique entre le raccord de dispositif (A1) et la soupape anti-retour (44).

4. Dispositif (10) selon la revendication 2 ou 3,
**caractérisé en ce que**
dans le premier état de commutation de la deuxième soupape (36), le conduit de liaison (54) est séparé du conduit d'amenée (46) et du premier conduit de retour (48), dans lequel dans le premier état de commutation de la deuxième soupape (36), le conduit d'amenée (46) est relié fluidiquement au troisième conduit de retour (52) par l'intermédiaire du premier et du quatrième raccord de dispositif (A1, A4), et dans lequel dans le premier état de commutation de la deuxième soupape (36), le premier conduit de retour (48) est relié fluidiquement au deuxième conduit de retour (50) par l'intermédiaire du deuxième et du troisième raccord de dispositif (A2, A3).

5. Dispositif (10) selon l'une quelconque des revendications 2 à 4,
**caractérisé en ce que**
dans le deuxième état de commutation de la deuxième soupape (36), le conduit d'amenée (46) est relié fluidiquement au conduit de liaison (54) par l'intermédiaire du premier et du cinquième raccord de dispositif (A1, A5), dans lequel dans le deuxième état de commutation de la deuxième soupape (36), le premier conduit de retour (48) est séparé du deuxième et du troisième conduit de retour (50, 52).

6. Dispositif (10) selon l'une quelconque des revendications précédentes,
**caractérisé en ce que**
sont prévus un quatrième conduit de retour (55) raccordé d'une part à un septième raccord de dispositif (A7) de la première soupape (34) et relié d'autre part fluidiquement au réservoir (22) et un deuxième conduit d'amenée (56) raccordé d'une part à un huitième raccord de dispositif (A8) de la première soupape (34) et relié d'autre part fluidiquement au réservoir (22).

7. Dispositif (10) selon la revendication 6,
**caractérisé en ce que**
dans un premier état de commutation de la première soupape (34), le conduit de liaison (54) est relié fluidiquement par l'intermédiaire du sixième et du septième raccord de dispositif (A6, A7) au quatrième conduit de retour (55) et est séparé du deuxième conduit d'amenée (56).

8. Dispositif (10) selon la revendication 6 ou 7,
**caractérisé en ce que**
dans un deuxième état de commutation de la première soupape (34), le conduit de liaison (54) est relié fluidiquement par l'intermédiaire du sixième et du huitième raccord de dispositif (A6, A8) au deuxième conduit d'amenée (56) et est séparé du quatrième conduit de retour (55).

9. Dispositif (10) selon l'une quelconque des revendications précédentes,
**caractérisé en ce que**
la deuxième soupape (36) présente un état intermédiaire différent du premier et du deuxième état de commutation de la deuxième soupape (36), dans lequel un écoulement du milieu hydraulique est autorisé depuis le premier raccord de dispositif (A1) simultanément vers le quatrième et le cinquième raccord de dispositif (A4, A5).

10. Système de frein de stationnement pour une boîte de vitesses automatique d'un véhicule automobile, avec au moins un frein de stationnement et avec un dispositif (10) selon l'une quelconque des revendications précédentes servant à actionner le frein de stationnement.
